# EUROPÄISCHE PATENTSCHRIFT

(11) **EP 0 369 440 B1**
(45) Veröffentlichungstag und Bekanntmachung des Hinweises auf die Patenterteilung: **23.03.1994**
(21) Anmeldenummer: 89121195.5
(22) Anmeldetag: 16.11.1989
(51) Int. Cl.: A01D 45/02

(54) **Verfahren und Vorrichtung zum Ernten von Fruchtständen**
Process and device for harvesting fruit on stalks
Procédé et appareil pour récolter les fruits sur pied

(30) Priorität: 18.11.1988 DE 3838979
(43) Veröffentlichungstag der Anmeldung: 23.05.1990
(73) Patentinhaber: Schulze Heuling, Ulrich, D-48231 Warendorf (DE)
(72) Erfinder: Schulze Heuling, Ulrich, D-48231 Warendorf (DE)
(74) Vertreter: Meldau, Gustav, Dipl.-Ing.

(56) Entgegenhaltungen:
- DE-A- 1 948 511
- FR-A- 2 175 044
- FR-A- 2 426 397
- FR-A- 2 453 595
- US-A- 2 604 750

## Beschreibung

Die Erfindung betrifft ein Verfahren zum Pflücken von Fruchtständen hochwachsender Pflanzen, beispielsweise von Mais oder Sonnenblumen, wobei der den Fruchtstand/die Fruchtstände aufweisende Stengel von zwei gegenläufig drehenden, mit kämmenden Reißleisten versehenen Einzugswalzen erfaßt und durch eine spaltförmige Abpflücköffnung gezogen wird, wobei der/die Fruchtstand/-stände vom Stengel abgetrennt und als Erntegut gesammelt werden und der von dem/den Fruchtstand/ständen befreite Stengel zu Häcksel zerkleinert wird.

Zum Ernten der Fruchtstände hochwachsender Pflanzen, wie beispielsweise von Mais oder Sonnenblumen, werden die Fruchtstände dadurch abgetrennt, daß der Stengel von einer Einzugswalze erfasst und durch einen Pflückspalt gezogen wird, dessen Weite enger ist als der Durchmesser des Fruchtstandes, so daß dieser beim Einziehen des Stengels abgerissen wird. Der abgepflückte Fruchtstand wird mit Transportmitteln zu einem Sammelbehälter der Erntemaschine gefördert; dazu werden Ketten-, Band- und/oder Schneckenförderer eingesetzt. Zum Ernten derartiger Pflanzen werden vorhandene landwirtschaftliche Erntemaschinen durch Vorsetzen entsprechender Pflückköpfe umgerüstet, wobei diese beispielsweise von der Zapfwelle direkt oder indirekt angetrieben werden. Es ist auch bekannt, Erntemaschinen mit Erntevorsätzen für derartige Fruchtstände, insbesondere von Mais auszurüsten, wobei die Erntemaschine von vornherein eine querverlaufende Antriebswelle aufweist, die mit entsprechenden Antriebsorganen für die angebauten Erntevorsätze versehen werden kann. Durch diese Maßnahme ist es möglich, landwirtschaftliche Maschinen oder Erntemaschinen in der Zeit der Maisernte für die Gewinnung dieser Fruchtstände einsetzbar zu machen. Diese Erntevorsätze erfassen den Maisstengel sehr tief und ziehen ihn dann durch einen Einzugsweg, wobei den angetriebenen Einzugswalzen der Pflückspalt vorgeschaltet ist.

Die DE-OS 17 57 213 beschreibt einen derartigen Erntevorsatz mit beidseits des Pflanzeneinzugswegs angeordneten, gegensinnig angetriebenen Einzugswalzen und einem im Einzugsweg der Einzugswalzen diesen vorgeschaltenen Pflückspalt, durch den der Pflanzenstengel beim Ernten der Fruchtstände gezogen wird. Die Fruchtstände können diesen Pflückspalt nicht passieren, sie werden vom Stengel abgerissen und von einem Förderer übernommen. Beide Einzugswalzen weisen überstehende Rippen auf, die beim Drehen miteinander in Eingriff kommen. Im Eingriffsbereich wird der erfasste Pflanzenstengel durch diese Rippen "gebrochen", ohne daß er im Bereich der Bruchstelle durchgetrennt wird. Dieses "Brechen" ist auf die Zertrümmerung verholzten Stengelmaterials im Einwirkungsbereich der Rippen beschränkt, wobei durchgehende Fasern - ähnlich dem Flachsbrechen - erhalten bleiben. Um den Pflanzenstengel sicher zu erfassen und durch den Pflückspalt ziehen zu können, sind zur Ausbildung der Einzugswalzen unterschiedliche Vorschläge gemacht worden: Nach DE-OS 30 13 689 weisen diese Walzen einen "Sternquerschnitt" auf, wobei die Hohlkehlen der einen Einzugswalze mit den vorstehenden Stegen der anderen Einzugswalze in Eingriff kommen; nach den US-PS'en 3 462 928 bzw. 3 174 484 sind auf eine Welle mit vieleckigem, vorzugsweise quadratischem Querschnitt Winkelprofile mit Bolzen aufgesetzt, die eine ähnliche Sternform bilden und die in vorbeschriebener Weise miteinander zusammenwirken. Eine Weiterbildung beschreibt die US-PS 2 604 750. Hier sind die Stege zu Schneidleisten ausgebildet, die mit einer im wesentlichen zylindrischen Gegenwalze zusammenwirken. Zur besseren Aufnahme von zum Beispiel liegenden Pflanzen wurde in DE-OS 19 48 511 vorgeschlagen, die mit Einzugsschnecken versehenen Nasen der Einzugswalzen mit einer anderen (höheren) Drehzahl laufen zu lassen als deren den Stengel erfassenden Einzugsteile. Dazu wird die Antriebswelle des Einzugsteils als Hohlwelle ausgebildet, durch die die Antriebswelle für die Einzugswalzennase geführt ist. Um Stengel (wesentlich) unterschiedlicher Stärke zu erfassen, wird von der FR-PS 1 268 615 schließlich vorgeschlagen, daß mindestens eine der Einzugswalzen über ein Kugelgelenk angetrieben wird, so daß beide Einzugswalzen in einem einstellbaren Winkel zueinander stehen und im Bereich der Einzugswalzennase einen dem Stengeldurchmesser entsprechenden Abstand aufweisen. In allen Fällen drehen die Einzugswalzen gegenläufig synchron mit gleicher Drehzahl, so daß das Zusammenwirken der Walzen sichergestellt ist. Nachteilig dabei ist, daß der Pflanzenstengel gebrochen aber nicht zerkleinert wird. Um die geforderte Zerkleinern des Stengels zu erreichen, ist das Nachschalten eines gesonderten Häckslers etwa nach DE-GM 67 51 770, DE-GM 79 09 440 oder DE-AS 20 05 352 notwendig.

Die DE-OS 32 13 542 beschreibt einen Erntevorsatz, bei dem das Zerkleinern des Stengels während der Einzugsbewegung erfolgen soll. Dazu ist vorgesehen, daß jedem Pflückspalt eine einzige Einzugswalze zugeordnet ist und daß der notwendige Widerhalt durch eine diese Einzugswalze teilweise umgebende Teil - Ummantelung gegeben wird. Diese Teil-Ummantelung ist darüber hinaus noch mit in Richtung der Einzugswalze weisenden Messern versehen, wobei die auf der Einzugswalze aufgesetzten Leisten Ausnehmungen aufweisen, so daß ein Kämmen der Mes-ser in den Leisten möglich ist. Abgesehen von den durch die Asymmetrie bedingten Probleme des Eintritts des Pflanzenstengels in den teilummantelten Bereich, ist für das Durchziehen der Stengel ein Quetschen zwischen den Leisten und der Teilummantelung wesentlich, wobei die Messer zum Zerkleinern des Stengels lediglich dann zur Wirkung kommen, wenn der Stengel in relativ starker Schräglage zu den Einzugswalzen eingezogen wird. Das Quetschen selbst führt lediglich zu einer Schwächung, ohne daß die für die Zerkleinerung notwendigen Trennung der einzelnen Stengel - Abschnitte erfolgt, wobei das Quetschen einen erheblichen Kraftbedarf an der Einzugswalze voraussetzt.

Hier setzt die Erfindung ein, der die Aufgabe zugrundeliegt, ein Verfahren anzugeben, bei dem die Nachteile des Standes der Technik überwunden werden und eine zwangsläufige Trennung der einzelnen, durch Brechen oder Knicken entstehenden Stengelabschnitte des Pflanzenstengels nach dem Abpflücken des Fruchtstandes erreicht wird und die darüber hinaus baukastenmäßig als Vorsatz für an sich bekannte Erntemaschinen verwendbar ist, wobei der Einsatz insbesondere durch eine Verringerung des Kraftbedarfes wirtschaftlich sein und der Erntevorsatz selbst einen einfachen und wartungsfreundlichen Aufbau aufweisen soll.

Diese Aufgabe wird in ihrem Verfahrensteil gelöst durch die im Kennzeichen des Anspruchs 1 beschriebenen Merkmale und in ihrem Vorrichtungsteil durch die im Kennzeichen der Ansprüche 4, 5 und 12 beschriebenen Merkmale; Weiterbildungen und bevorzugte Ausführungsformen beschreiben die darauf rückbezogenen Unteransprüche.

Durch den Einsatz von Einzugswalzen mit Reißleisten, die mit unterschiedlichen Umfangsgeschwindigkeiten laufen, weisen diese Reißleisten im Einzugsweg unterschiedliche Tangentialgeschwindigkeiten auf, so daß die erfassten Stengel durch diesen Unterschied an der Brechstelle mit Sicherheit zerrissen werden. Dabei liegen die Bewegungskreise der Reißleisten so, daß sie zumindest sich berühren, vorteilhafterweise jedoch auch überlappen. Um ein Zusammenwirken der Reißleisten im Hinblick auf das Brechen und das Durchtrennen des Stengels zu erreichen, ist eine entsprechende Abgleichung der Drehbewegung notwendig, wobei die mit größerer Umfangsgeschwindigkeit laufende Einzugswalze bei gleichen Durchmesser mit höherer Drehzahl angetriebei wird und notwendigerweise eine geringere Anzahl von Reißleisten aufweisen muß. Diese geringere Anzahl von Reißleisten wird so eingestellt, daß bei jedem Durchgang einer Reißleiste der langsameren Einzugswalze durch den Einzugsweg ein Durchgang einer Reißleiste der schnelleren Einzugswalze zugeordnet ist. Eine andere Möglichkeit dies zu erreichen, ist dadurch gegeben, daß die mit größerer Umfangsgeschwindigkeit laufende Einzugswalze bei gleichen Drehzahlen beider einen größeren Duchmesser aufweist. Hierbei können beide Einzugswalzen mit der gleichen Anzahl von Reißleisten versehen sein. Die Abstimmung der Drehbewegung muß in beiden Fällen so erfolgen, daß unmittelbar vor dem Berühren bzw. der Überlappung die schnellere Reißleiste die langsamere "überholt" hat und im Bereich des Stengel - Auslaufs dieser vorauseilt. Dadurch wird im Bereich des Einlaufs der Stengel gebrochen und die Brechstelle durch das Vorauseilen der schnelleren Reißleiste im weiteren Verlauf des Einzugsweges zum Durchreißen gebracht. Durch das Brechen der Stengel vor dem Durchreißen wird dabei der für das Zerkleinern des Stengels notwendige Kraftbedarf verringert, da die bereits aufgebrachte "Brecharbeit" die zum Zerkleinern benötigte "Reißarbeit" entsprechend mindert. Diese Verringerung des Kraftbedarfs hat auch eine Verringerung des gesamten Leistungsbedarf des Erntevorsatzes zur Folge, was sich letztendlich auf die zu installierende Motorleistung bzw. auf die bei gegebener Motorleistung mögliche Anzahl von Vorsätzen auswirkt und eine einfachere Konstruktion der Antriebsorgane erlaubt.

Vorteilhaft ist es, wenn das Drehzahlverhältnis der beiden Einzugswalzen ein ganzzahliges ist, etwa 1:2. Dies bedeutet, daß die schnellere Einzugswalze die N-fache Drehgeschwindigkeit, vorzugsweise die doppelte Drehgeschwindigkeit gegenüber der langsameren Einzugswalze aufweist, und daß die Anzahl ihrer Reißleisten das 1/N-fache - vorzugsweise das 1/2-fache - der Anzahl der Reißleisten der langsameren Einzugswalze ist. Auch einfache nicht - ganzzahlige Verhältnisse - etwa 4 : 6 - sind dabei ebenfalls möglich, wesentlich ist nur, daß im Bereich des Einzugswegs die Bewegungen der Reißleisten zwangsweise in Abhängigkeit voneinander erfolgen, wie oben beschrieben. Dies wird vorteilhaft durch eine starre Kupplung im Kraftweg, z.B. durch Zahnrad - Getriebe oder Ketten - Übertragungen erreicht.

Der Erntevorsatz, mit dem dieses Verfahren vorteilhaft durchgeführt werden kann, kann einzeln oder zu mehreren kombiniert als Vorsatz für vorhandene landwirtschaftliche Maschinen oder Erntemaschinen angesetzt werden, wobei sein Antrieb über einen Zwischenantrieb von der Erntemaschine erfolgt und dieser Zwischenantrieb, insbesondere auch die in Arbeitsrichtung der Maschine weisenden Fördereinrichtungen mit antreibt. Der Antrieb der Einzugswalzen erfolgt ausgehend von dem Zwischenantrieb über Zwischengetriebe. Beide Einzugswalzen sind mit Reißleisten versehen, deren Anzahl entsprechend dem Drehzahlverhältnis unterschiedlich ist und die über den Bewegungskreis des Einzugswalzenmantels hinaus überstehen. Dabei ist es ohne Bedeutung, wie dieser Überstand ist, dies hängt wesentlich von der Art der Einzugswalze selbst ab. Zylindrische Einzugswalzen können in einfacher Weise mit radial abstehenden Reißleisten versehen sein.

Bei anderen Bauarten weisen die Einzugswalzen polygonale Querschnitte auf; hierbei können die Reißleisten einfach als Fortsetzung der Polygonseiten ausgebildet sein, die dann etwa tangential zum Bewegungskreis des Einzugswalzenmantels stehen. Es versteht sich von selbst, daß auch Zwischenformen - etwa durch eine Abkantung der überstehenden, verlängerten Polygonflächen - möglich sind. Der Antrieb der gegensinnig umlaufenden Einzugswalzen erfolgt dabei über ein Zwischengetriebe, das seinerseits über den Zwischenantrieb mit dem Antrieb der Erntemaschine in Wirkverbindung steht. Das für die Durchführung des Verfahrens notwendige Verhältnis der Umdrehungszahl kann dabei einfach dadurch erreicht werden, daß beide Einzugswalzen, vom gleichen Zwischenantrieb ausgehend, über Zwischengetriebe auf die unterschiedlichen Ausgangsdrehzahlen gebracht, angetrieben werden. Eine andere Möglichkeit ist dadurch gegeben, daß eine der Einzugswalzen über ein Zwischengetriebe mit dem Zwischenantrieb der Erntemaschine in Wirkverbindung steht und beide Einzugswalzen miteinander durch Zahnräder gekuppelt sind, wobei die unterschiedliche Drehzahl der anderen Einzugswalzen durch das durch die Zähnezahlen gegebene Übersetzungsverhältnis dieser Zahnräder gegeben ist.

Um die auftretenden Reißkräfte besser auf den erfassten Stengel übertragen zu können, ist es vorteilhaft, die Außenkanten der Reißleisten keilförmig anzuschärfen. Durch diese keilförmigen Anschärfungen dringen die Reißleisten - Kanten tiefer in den Stengel ein und finden so den notwendigen Widerstand zum Übertragen der zum Durchreißen notwendigen Kraft. Um die genaue Positionierung der Einzugswalzen zueinander sicherzustellen, ist es vorteilhaft, wenn mindestens eine der Einzugswalzen justierbar ist. Eine Schnelleinstellung, z.B. durch die als Rohr ausgebildete Antriebswelle der einstellbaren Einzugswalze hindurch, erleichtert das Verstellen, das dann auch noch auf dem Feld zur Anpassung an die vorliegenden Gegebenheiten des Wuchses der Pflanzen erfolgen kann.

Darüber hinaus liegt eine vorteilhafte Weiterbildung darin, daß die Lage der zum Pflückspalt annähernd parallelen Achsen der beiden Einzugswalzen in Bezug auf die Pflückschienenebene unterschiedlich ist. Wird dieser Abstand einer der Einzugswalzen so eingestellt, daß er um mindestens eine Reißleistenstärke größer ist als der Abstand der Achse der anderen Einzugswalze von der Pflückschienenebene, kann eine engere Überlappung einfach erreicht werden.

Um Stoß - Belastungen zu vermeiden, ist es darüber hinaus vorteilhaft, wenn die Reißleisten in Bezug auf die Einzugswalzen bogenförmig geführt sind. Durch diese Bogenform kommen die Reißleisten nicht über ihre gesamte Länge hinweg auf einmal in Eingriff, so daß bei mehreren erfassten Stengeln das Brechen und das Reißen zeitlich nacheinander erfolgen und so der Kraftbedarf "vergleichmäßigt" wird. Es versteht sich von selbst, daß dabei die Anordnung der Reißleisten entsprechend der gewünschten Überlappung ausgebildet sein muß, so daß immer die schnellere der beiden im Einzugsweg zusammenwirkenden Reißleisten ungehindert vorweglaufen kann. Der gleiche Effekt würde erreicht werden, wenn die zu einer Mantellinie der Einzugswalze parallelen Reißleisten in einzelne Abschnitte unterteilt und um einen gewissen Winkel gegeneinander versetzt angeordnet werden. Diese Anordnung ist dann vorteilhaft, wenn die Reißleisten etwa mit ihrer gesamten Höhe überlappen sollen. Der Winkel zwischen den Abschnitten wird vorteilhaft so eingestellt, daß nach einer Umdrehung der langsameren Einzugswalze die Abfolge der an sich gleich verteilten Eingriffe von vorn beginnt.

Das Wesen der Erfindung wird anhand der in den beigefügten Figuren 1 bis 5 dargestellten Ausführungsbeispiele näher erläutert; dabei zeigen
- Figur 1:: Zwei Erntevorsätze mit angedeuteter Erntemaschine;
- Figur 2:: Antrieb der Einzugswalzen, beide über Vorgelege angetrieben (Schnitt);
- Figur 3:: Antrieb der Einzugswalzen mit zwischengeschalteter Zahnradübertragung (Schnitt);
- Figur 4:: Schnitt einer Einzugswalze mit polygonalem Querschnitt und 4 Reißleisten (teilgeschnitten);
- Figur 5:: Schema des Bewegungsablaufs der miteinander zusammenwirkenden Einzugswalzen eines Erntevorsatzes;
- Figur 6:: Schnitt durch den Einzugsweg mit höhenversetzten Einzugswalzen, schematisch;
- Figur 7:: Schema des Bewegungsablaufs der miteinander zusammenwirkenden Einzugswalzen mit verschiedenen Durchmessern;
- Figur 8:: Einzugswalze mit in unterschiedlichen Winkelstellungen angeordneten Reißleistenabschnitten (verkürzt);
- Figur 9:: Schnitt einer Einzugswalze entsprechend IX - IX (Fig. 8)
- Figur 10:: Einzugswalzen - Paar mit bogenförmig verlaufenden Reißleisten (abgebrochen);
- Figur 11:: Erntevorsatz an (angedeuteter) Erntemaschine im Winkel zur Fahrtrichtung.

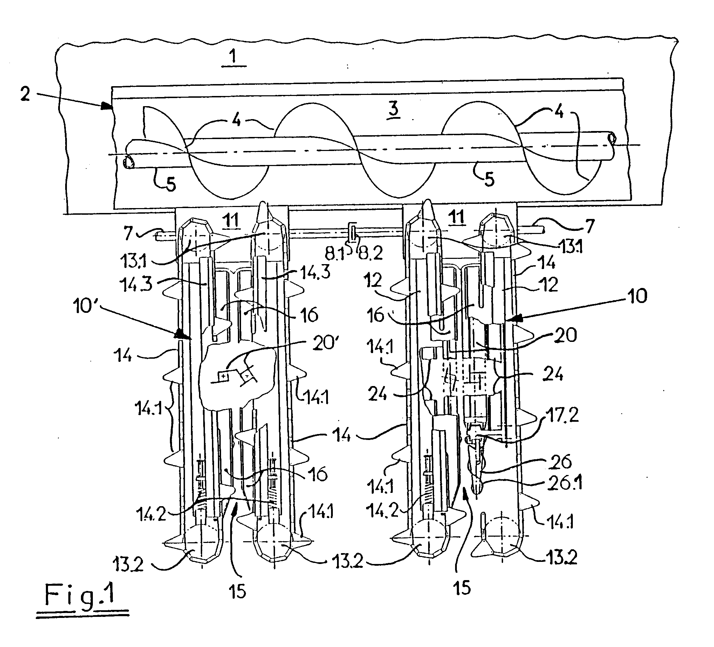

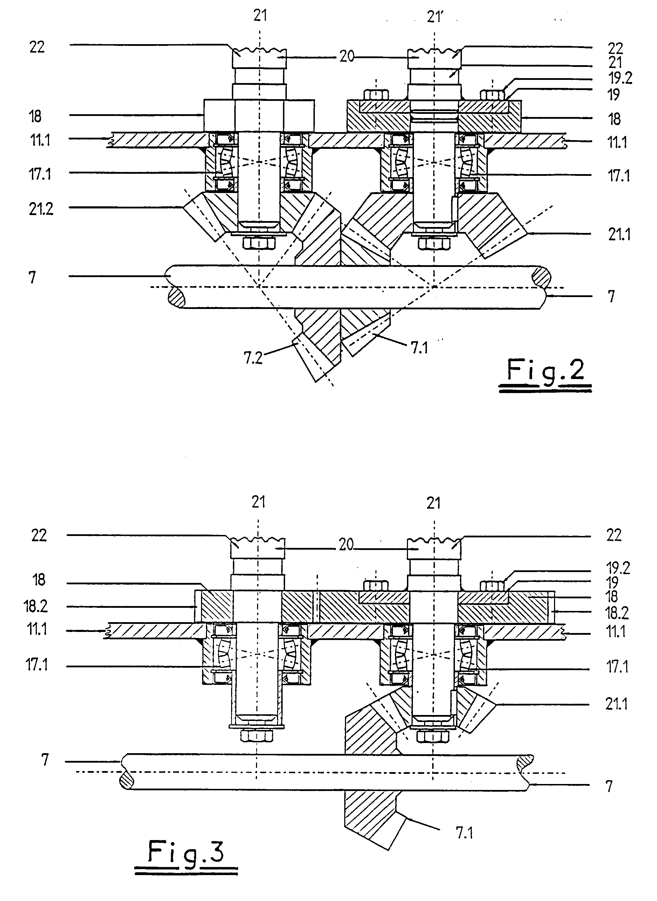

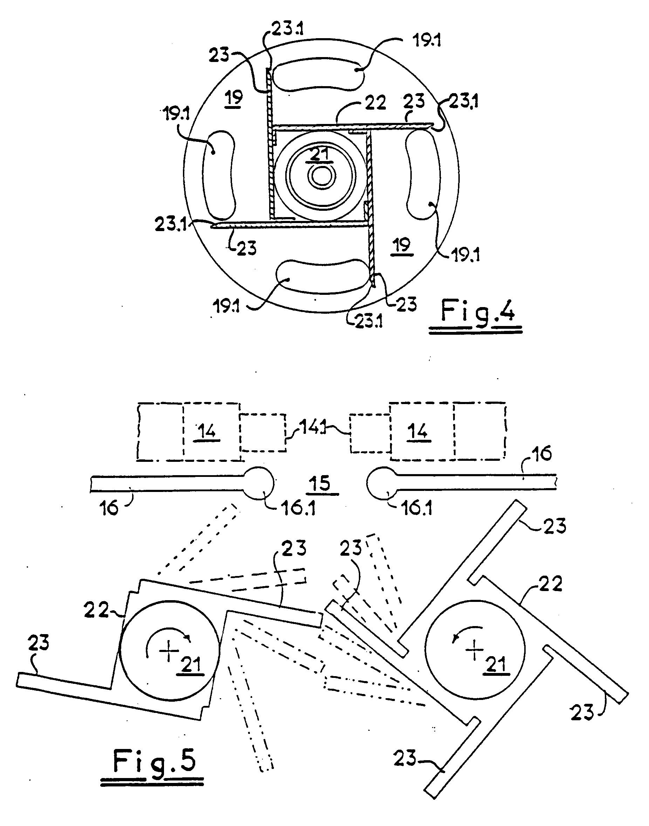

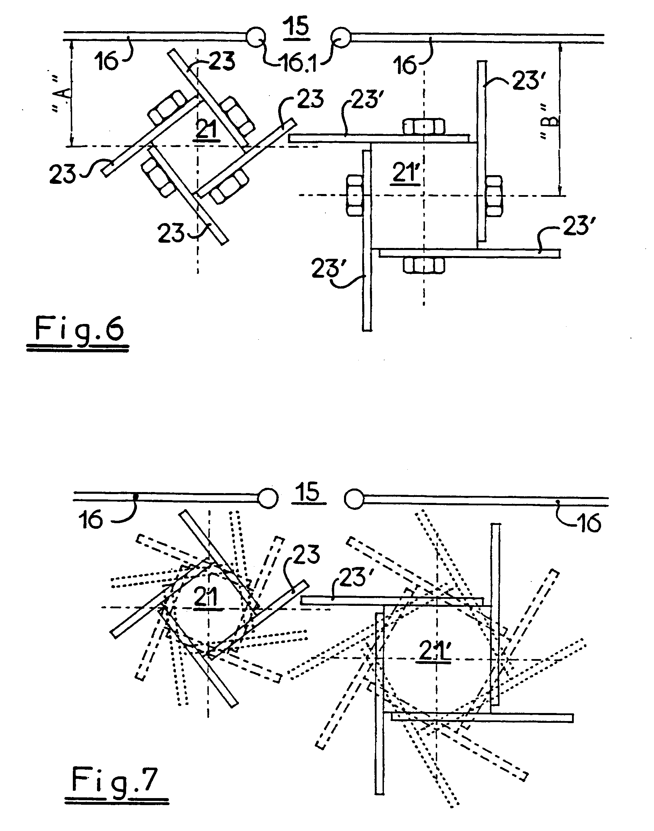

Die Figur 1 zeigt zwei an der Stirnseite einer (nicht näher dargestellten) Erntemaschine 1 angesetzte Erntevorsätze 10 bzw. 10′ zum Ernten der Fruchtstände hochwachsender Pflanzen, insbesondere von Mais. Die Erntevorsätze werden dabei frontseitig an der Erntemaschine 1 befestigt, so daß der an jedem Erntevorsatz vorgesehene Längsförderer 14 in einen Querförderer 2 entleert, in dem das Erntegut mit Hilfe einer im Fördertrog 3 laufenden, um eine Schneckenwelle 5 gewendelten Förderschnecke 4 seitlich zur Übernahme entweder in den Sammelbehälter oder zu einer weiteren Fördereinrichtung abtransportiert wird. Erntemaschinen weisen oftmals mittige Übernahmen auf, so daß zur Ausnutzung der gesamten Breite der Querförderer eine durchgehende Schneckenwelle 3 enthält, auf der jedoch zwei gegensinnig angeordnete Schnecken 4 vorgesehen sind, so daß das Erntegut von beiden Seiten zur Übernahmestelle gefördert wird. Vom Antrieb der Erntemaschine 1 wird ein Zwischenantrieb mit einer Querwelle 7 in üblicher Weise abgeleitet, die ihrerseits den Antrieb für die Erntevorsätze 10, 10′ liefert. Da die Erntevorsätze 10 austauschbar sind, sind Kuppungselemente 8.1 und 8.2 vorgesehen, die die einzelnen, jedem der Erntevorsätze 10 zugeordneten Teilstücke der Querwelle 7 trennen. Die Querwelle 7 ist durch den Antriebskasten 11 der Erntevorsätze 10 geführt, in dem als Antriebsorgane Zwischengetriebe vorgesehen sind, über die sowohl die Einzugswalzen 20 als auch die an jeder Erntevorrichtung 10 vorgesehenen Längsförderer 40 angetrieben werden. Vom Antriebskasten 11 bis zur Spitze des Erntevorsatzes erstrecken sich beidseitig Grundgestelle 12, die an ihren freien Enden die stirnseitigen Umlenkräder 13.2 für den mit einer Förderkette 14 versehenen Längsförderer aufweisen. Zum Spannen der Förderkette sind Kettenspanner 14.2 vorgesehen, die auf die spitzenseitigen Umlenkräder 13.2 einwirken; die Kette ist zumindest auf der dem Einzugsweg zugewandten Seite in Führungsschienen 14.3 geführt. Die Kette wird von den antriebsseitig angeordneten Antriebsrädern 13.1, die in üblicher und bekannter Weise mit der Querwelle 7 in Wirkverbindung stehen, angetrieben. Auf der Förderkette 14 befinden sich Mitnehmernocken 14.1, die im Bereich des Pflückspaltes 15 die vom Stengel abgetrennten Fruchtstände übernehmen und zum Querförderer 2 transportieren. Dabei verhindern die Kettenführungen 14.3 ein Ausweichen desfördernden Trums der Kette 14, so daß die Förderung zwangsläufig erfolgen muß. Unterhalb des durch die Förderketten 14 gegebenen Förderweges liegen die Pflückbleche 16, zwischen denen sich der Pflückspalt 15 befindet. Durch diesen Pflückspalt 15 werden die Pflanzenstengel gezogen, wenn sie bei der Vorwärtsbewegung der Erntemaschine 1 von den Nasen 26 der Einzugswalzen 20 mit den darauf angeordneten Einzugsschnecken 26.1 erfasst und in den Bereich der mit den Reißleisten 23 (Figur 4,5) versehenen Teile der Einzugswalzen 20 gefördert werden. Die Einzugswalzen selbst sind in einem antriebsseitigen Lager 17.1 (Figur 2,3) und in einem nasenseitigen Lager 17.2 gelagert, wobei sich das antriebsseitige Lager 17.1 gegen den Antriebskasten 11 und das Spitzenlager 17.2 gegen den Grundrahmen 12 abstützen. Um die mit den Reißleisten 22 (Figur 4,5) versehenen Einzugswalzen im Betrieb sauber zu halten, sind auf der dem Pflückspalt 15 abgewandten Seite Abstreifer 24 vorgesehen, die an den Reißleisten 23 hängengebliebene Pflanzenteile o.dgl. abstreifen.

Die Figuren 2 und 3 zeigen zwei unterschiedliche Ausführungsformen der Einzugswalzen - Antriebe; die Einzugswalzen 20 sind dabei als auf Einzugswalzen - Wellen 21 aufgesetzte Einzugswalzen - Mäntel 22 dargestellt, wobei die Reißleisten zur Vereinfachung nicht mit eingezeichnet sind. In der Figur 2 werden beide Einzugswalzen 20 über Kegelradpaare angetrieben, wobei zwei gegenständige Kegelräder 7.1 und 7.2 mit der Antriebswelle 7 fest verbunden sind und jedes dieser beiden Kegelräder 7.1 und 7.2 mit einem Kegelrad 21.1 und 21.2 auf den antriebsseitigen Enden der Einzugswalzen - Wellen 21 kämmen. Durch diese Anordnung wird automatisch die notwendige Umkehrung des Drehsinnes erreicht. Durch Wahl der entsprechenden Kegelrad - Durchmesser sowie der Zähnezahl von erstem und zweiten Kegelrad bzw. einem Tellerrad mit kegeligem Zahnkranz lassen sich die gewünschten Übersetzungsverhältnisse so einstellen, daß jeweils eine der Reißleisten 23 der einen der Einzugswalzen 20 mit einer der Reißleisten 23 der anderen Einzugswalzen 20 zusammenwirkt. Die antriebsseitigen Enden der Einzugswalzen - Wellen 21 sind in gehäusefesten Lagern 17.1 gelagert, wobei diese Lager die Vorderwand 11.1 des Antriebskastens 11 (Figur 1) durchdringen. Auf der einen Antriebswelle 21 ist ein Wellenflansch 18 vorgesehen, wobei die Antriebswelle 21, um eine Verstellbarkeit zu erreichen, unterbrochen ist, so daß der Wellenstumpf 21′ in dem Basisflansch 18 endet und mit diesem durch Schweißen oder Passfeder o.dgl. verbunden ist. Die Einzugswalzen - Welle 21 ist mit einem Basisflansch 19 versehen, der in eine Ausnehmung des Wellenflansches 18 eingefügt und mit Schrauben 19.2 mit diesem verbunden ist. Durch in dem Basisflansch 19 vorgesesehene, kreissektorartig ausgebildete Langlöcher 19.1 ist der Basisflansch 19 gegenüber dem Wellenflansch 18 in Grenzen des durch die Länge der Langlöcher gegebenenen Winkels verdrehbar, so daß mindestens eine der Einzugswellen 20 gegenüber der an deren zum Justieren verdreht werden kann. Es versteht sich von selbst, daß das Einlassen des Basisflansches 19 in den Wellenflansch 18 nicht notwendig ist, sondern daß der Basisflansch 19 auch auf den Wellenflansch aufgesetzt und befestigt sein kann. Es versteht sich weiter von selbst, daß nicht beide Einzugswalzen 20 justierbar ausgebildet sein müssen und daß die an sich nicht verstellbare der beiden Einzugswalzen 20 in gleicher Weise wie die verstellbare am Wellenflansch 18 befestigt werden kann, nämlich mittels eines Basisflansches 19. Dies erleichtert die Vorratshaltung bei der Montage sowie die Montage selbst. Die Größe des notwendigen Verstellwinkels hängt von der Präzision der Fertigung und von dem durch das Zwischengetriebe gegebenen Spiel ab, das sich durch Abnutzung im Laufe der Betriebszeit vergrößern kann, so daß die durch diese Anordnung gegebene Nachstellmöglichkeit eine Dreh - Justage erlaubt.

In der Figur 3 ist eine Variante dargestellt; hier wird die eine der Einzugswalzen 20 in vorbeschriebener Weise von der Welle 7 des Zwischenantriebs über ein Kegelradpaar 7.1 und 21.1 angetrieben. Die Wellenflansche 18 sind hier mit Zahnkränzen 18.1 und 18.2 versehen, sie bilden Stirnräder, die miteinander kämmen: Dadurch wird die notwendige Umkehr des Drehsinnes erreicht und durch die Wahl des Durchmessers der Stirnräder bzw. ihrer Zähnezahl wird das gewünschte Übersetzungsverhältnis eingestellt. Beide Wellen 21 sind dabei in der Frontplatte 11.1 des Antriebskasten 11 angeordneten Lagern 17.1 wie vorbeschrieben gelagert. Dabei ist die Einzugswalzen - Welle 21 der über das Kegelradpaar 17.1 und 21.1 angetriebenen Einzugswalzen - Welle 21 mit dem Wellenflansch 18 lediglich geführt, jedoch mit dem Basisflansch 19 fest verbunden. Dieser Basisflansch 19 ist in vorbeschriebener Weise mittels durch Langlöcher 19.1 (Figur 4) geführte Schrauben 19.2 an dem Wellenflansch 18 befestigt, so daß der Basisflansch 19 und somit die diesem zugeordnete Einzugswalze 20 gegenüber dem Wellenflansch 18 verdreht werden kann. Der Wellenflansch 18 der vom Stirnrad angetriebenen Einzugswalze 20 ist mit der Einzugswalzen-Welle über eine Passfeder oder auch durch eine Schweiß- oder Pressverbindung fest verbunden. Der Kraftfluß erfolgt dabei vom Kegelradpaar über die erste Einzugswalzen - Welle 21 zu der ihr zugeordneten Einzugswelle sowie über eine Verzweigung über das Stirnradpaar mit der Verzahnung 18.1 und 18.2 zu der anderen Einzugswalzen - Welle, wobei die Wellenflansche die miteinander zusammenwirkenden Stirnräder bilden.

Die Figur 4 zeigt eine Einzugswalze mit polygonalem Walzenmantel im Querschnitt. Das Ende der Einzugswalze wird von dem Wellenflansch 19 gebildet, in dem sich - bei der hier dargestellten verstellbaren Einzugswalze - die bogenförmigen, kreissektorartig ausgebildeten Langlöcher 19.1 zum Verschrauben der Einzugswalze 20 auf dem Wellenflansch 18 (Figur 2, 3) befinden. Die Einzugswalzen - Welle 20 ragt in das Innere eines (hier quadratisch dargestellten) polygonartig ausgebildeten Walzenmantel 22, wobei die verlängerten Seiten des Polygons die Reißleisten 23 bilden. An den freien Enden sind die Reißleisten 23 angeschärft, so daß sie Keile 23.1 bilden, die nicht scharfkantig ausgebildet sind sondern stumpf enden. Zwei derartig ausgebildete Einzugswalzen sind in ihrem Zusammenwirken schematisch in Figur 5 dargestellt, wobei die beiden Einzugswalzen über die Einzugswalzen - Wellen 21 angetrieben, einen quadratischen Mantel 22 aufweisen, wobei eine der Einzugswalzen mit vier Reißleisten 23 versehen ist und die andere (doppelt so schnell drehende) mit zwei Reißleisten 23. Die Einzugswalzen sind unterhalb der Pflückschiene 16 angeordnet, deren abgerundete verstärkte Ränder 16.1 den Pflückspalt beidseitig begrenzen. Oberhalb des Pflückspaltes 15 laufen die beiden rücklaufenden Trums der Förderkette 14 mit ihren Fördernocken 14.1, mit denen die abgepflückten Fruchtstände zum Querförderer 3 (Figur 1) transportiert werden.

In der Figur 5 wird der Bewegungsablauf entsprechend den eingezeichneten Drehpfeilen (deren unterschiedliche Länge die unterschiedliche Drehgeschwindigkeit wiedergibt) schematisch dargestellt. Zunächst befinden sich die miteinander zusammenwirkenden beiden Reißleisten in der kurzgestrichelt dargestellten Stellung und bewegen sich in Richtung des Einzugsweges 15, um nach einer gewissen Zeit die langgestrichelt dargestellte Stellung und schließlich die durchgezogen dargestellte Stellung zu erreichen. Im Bereich der langgestrichelt dargestellten Stellung überholt die schnellere der Reißleisten die langsamere, um von der durchgezeichnet dargestellten Stellung an dieser vorauszueilen, wie die strich - punktiert und die strich - doppelpunktiert dargestellten Stellungen deutlich erkennen lassen. Die größere Umfangsgeschwindigkeit der der schnelleren der Einzugswalzen zugeordneten Reißleiste bedingt im Bereich des Einzugsweges 15 eine größere Lineargeschwindigkeit, wodurch der im Einlauf in den Wirkbereich der Einzugswalzen vorgebrochene Stengel im Bereich der Bruchstelle durchgerissen wird.

Die Figuren 6 und 7 zeigen einen Schnitt durch den Einzugsweg entsprechend Figur 5 mit den beiden, den Pflückspalt 15 begrenzenden Pflückschienen 16, deren Pflückkanten 16.1 verstärkt sind, sowie den unter diesen Einzugswalzen angeordneten Einzugswalzen 21 und 21′. Auf den Seitenflächen der rechteckig dargestellten Einzugswalze 21 bzw. 21′ sind die Reißleisten 23 aufgeschraubt. Gegenüber der im Abstand "A" von der Plückschienenebene angeordneten Einzugswalze 21 ist die andere Einzugswalze 21′ von der Pflückschienenebene um den größeren Abstand "B" entfernt. Die Längen der Reißleisten 23 der Einzugswalze 21 und die der Reißleisten 23′ der Einzugswalze 21′ sind dabei so aufeinander abgestellt, daß sie im Einzugsgebiet leicht überlappen. In der Darstellung sind beide Einzugswalzen mit unterschiedlichen Durchmessern dargestellt. Dies bedeutet, daß die längeren Reißleisten 23′ bei gleicher Winkelgeschwindigkeit beider Einzugswalzen die größere Tangentialgeschwindigkeit aufweisen und somit das gewünschte Voreilen sogar bei gleicher Drehzahl durch die unterschiedlichen Durchmesser bedingt ist. Bei der Einstellung muß dafür Sorge getragen werden, daß die längeren Reißleisten 23′ vor den kürzeren Reißleisten 23 in den Einzugsweg eintreten, damit diese voreilend den Einzugsweg wieder verlassen können, wobei im übrigen die Darstellung der Figur 7 der der Figur 5 enspricht.

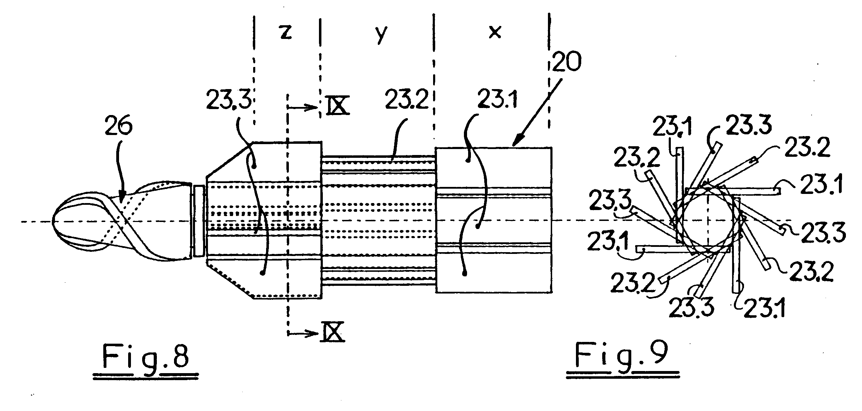

Die Figuren 8 und 9 zeigen eine einzelne Reißwalze 21, die - verkürzt dargestellt - in drei Abschnitte x, y und z unterteilt ist. In diesen Abschnitten x, y und z sind die Reißleisten 23.1 (Abschnitt x), 23.2 (Abschnitt y) und 23.3 (Abscnitt z) um gewisse Winkelbeträge gegeneinander versetzt. Dies zeigt die Figur 9 entsprechend dem in Figur 8 angedeuteten Schnitt IX - IX. Es versteht sich von selbst, daß die Unterteilungen immer auf den Vollkreis zu beziehen sind, d.h. bei drei Unterteilungen ist der Winkelabstand 120°, bei vier 90° usw; es versteht sich weiter von selbst, daß die zweite Einzugswalze eine entsprechende Unterteilung aufweist.

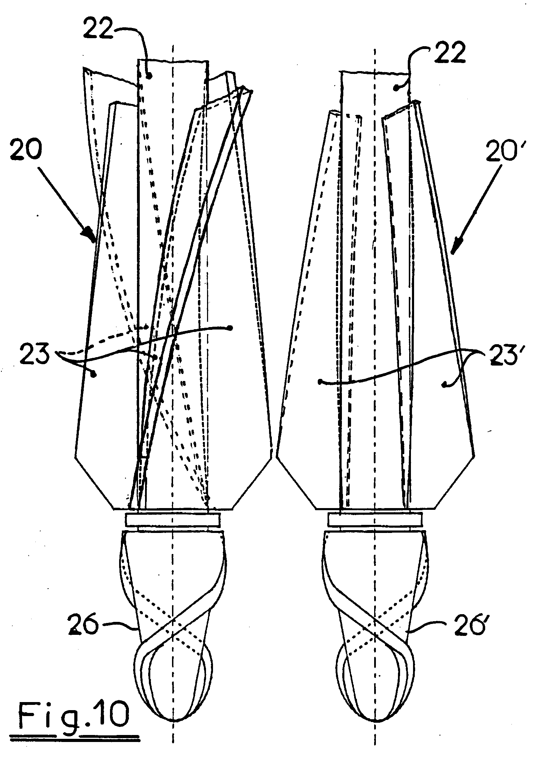

Die Figur 10 zeigt zwei Einzugswalzen 20 und 20′, deren Reißleisten bogenförmig auf die Mantelflächen 22 bzw. 22′ der hier zylindrischen Wellen aufgesetzt sind. Dabei weist die eine Einzugswalze 20 vier und die andere Einzugswalze 20′ zwei Reißleisten auf, deren Anordnung wegen des gegensinnigen Drehsinnes auch gegenläufig sein muß (zur besseren Darstellung wurde auf das Einzeichnen aller Wurzellinien verzichtet). Um bei jeden Durchgang einer Reißleiste der ersten Einzugswalze 20 auch einen Durchgang der Reißleisten der anderen Einzugswalze 20′ zu erreichen dreht hier diese mit der doppelter Drehzahl der einen.

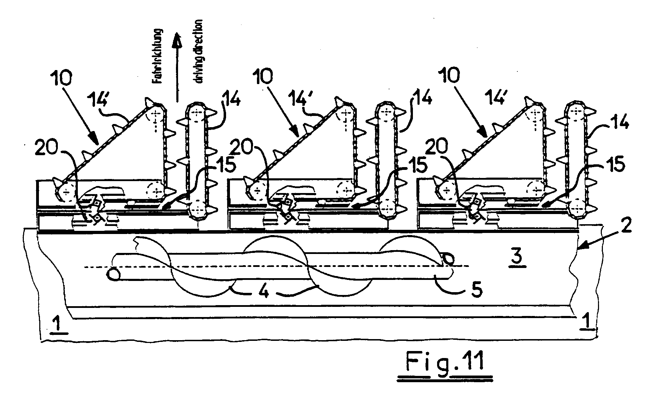

Die Figur 11 zeigt schließlich eine der Figur 1 entsprechende Anordnung von Erntevorsätzen 10 vor der (angedeuteten) Erntemaschine 1, wobei der Querförderer 2 der Erntemaschine so angeordnet ist, daß er mit seiner auf der Schneckenwelle 5 vorgesehenen Schnecke 4 die in den Erntevorsätzen 10 abgepflückten und in den Trog 3 des Querförderers fallenden Fruchtstände übernehmen und zu einer Sammelstelle abfördern kann. Bei der Fahrt durch ein Feld werden die Stengel der in Reihen stehenden Pflanzen der Fahrtrichtung entsprechend von den gegenläufigen Förderketten 14 und 14′ erfaßt und zum Pflückspalt 15 transportiert, wobei die eine Förderkette 14′ über drei Umlenkräder so im Dreieck geführt ist, daß eine Dreieckseite parallel zu dem im Winkel zur Fahtrichtung angeordneten Pflückspalt 15 verläuft. Die Einzugswalzen 20 liegen hier parallel zum Pflückspalt 15 und somit im gleichen Winkel zur Fahrtrichtung.

Der hier vorbeschriebene Erntevorsatz kann gegenüber der Horizontalen in geeigneter Weise zum Boden hin geneigt an der Erntemaschine angeordnet sein, insbesondere um auch liegende Pflanzen, z.B. Lagermais aufnehmen zu können. Die Nasen 26 der Einzugswalzen 20 liegen hierdurch tiefer als ihre antriebsseitigen Enden. Darüberhinaus kann auch der Pflückspalt 15 gegenüber der Fahrtrichtung der Erntemaschine verschwenkt sein, so daß ein Winkel zwischen Fahrtrichtung und Pflückspalt (und damit auch zwischen Fahrtrichtung und Pflückschienen sowie Einzugswalzen) vorhanden ist, der bis zu 90° betragen kann.

## Patentansprüche

1. Verfahren zum Pflücken von Fruchtständen hochwachsender Pflanzen, beispielsweise von Mais oder Sonnenblumen, wobei der den Fruchtstand/die Fruchtstände aufweisende Stengel von zwei gegenläufig drehenden, mit kämmenden Reißleisten versehenen Einzugswalzen erfaßt und durch eine spaltförmige Abpflücköffnung gezogen wird, wobei der/die Fruchtstand/-stände vom Stengel abgetrennt und als Erntegut gesammelt werden und der von dem/den Fruchtstand/-ständen befreite Stengel zu Häcksel zerkleinert wird, **dadurch gekennzeichnet**, daß die den Stengel erfassenden, gegenläufig drehenden Einzugswalzen mit unterschiedlichen Umfangsgeschwindigkeiten umlaufen, wobei deren Reißleisten den Stengel zunächst brechen und dann durch den Geschwindigkeitsunterschied der jeweils zusammenwirkenden Reißleisten im Bereich des Auslaufs durchreißen, wobei Anzahl und Stellung der Reißleisten derart sind, daß entsprechend der unterschiedlichen Umfangsgeschwindigkeiten beim Durchgang einer Reißleiste der einen Einzugswalze durch den Einzugsweg ebenfalls eine Reißleiste der anderen Einzugswalze durch den Einzugsweg geht, den die der schnelleren Einzugswalze zugeordnete Reißleiste voreilend verläßt.

2. Verfahren nach Anspruch 1, **dadurch gekennzeichnet**, daß die unterschiedliche Umfangsgeschwindigkeit dadurch erreicht wird, daß bei gleichem Durchmesser der Einzugswalzen die erste Einzugswalze mit einer N-fachen, vorzugsweise der 2-fachen Drehzahl gegenüber der zweiten Einzugswalze betrieben wird, wobei durch Anzahl und Anordnung der Reißleisten der Durchgang einer der Reißleisten der ersten Einzugswalze durch den Einzugsweg auch immer mit dem Durchgang einer der Reißleiste der zweiten Einzugswalze durch den Einzugsweg verbunden ist, und die Bewegungskreise dieser Reißleisten einander überlappen.

3. Verfahren nach Anspruch 1, **dadurch gekennzeichnet**, daß die unterschiedliche Umfangsgeschwindigkeit dadurch erreicht wird, daß bei unterschiedlichem Durchmesser der Einzugswalzen beide Einzugswalzen mit gleicher Drehzahl betrieben werden, wobei durch Anzahl und Anordnung der Reißleisten der Durchgang einer der Reißleisten der ersten Einzugswalze durch den Einzugsweg auch immer mit dem Durchgang einer der Reißleiste der zweiten Einzugswalze durch den Einzugsweg verbunden ist, und die Bewegungskreise dieser Reißleisten einander überlappen.

4. Erntevorsatz zum Pflücken von Fruchtständen hochwachsender Pflanzen, wie beispielsweise Mais oder Sonnenblumen, zur Durchführung des Verfahrens nach einem der Ansprüche 1 bis 3, der einzeln oder zu mehreren mit einem landwirtschaftlichen Erntegerät verbindbar ist, und der einen Einzugsweg für die Pflanzen aufweist, der von einem Pflückblech (16) mit einem Pflückspalt (15), sowie von einer ersten und einer zweiten, im wesentlichen sich parallel zu dem Pflückspalt (15) erstreckenden, mit radialen, miteinander kämmenden Reißleisten (23) versehenen, sich gegenläufig drehenden Einzugswalzen (20) gebildet ist, wobei jede der Einzugswalzen (20) über ein Zwischengetriebe (7.1, 21.1; 7.2, 21.2 oder 7.1, 21.1; 18.1, 18.2), von denen zumindest das erste als Kegelrad-Paar ausgebildet ist, von der Erntemaschine synchronisiert antreibbar sind, **dadurch gekennzeichnet**, daß als zweites Zwischengetriebe ein weiteres Kegelrad-Paar (7.2, 21.2) vorgesehen ist, wobei die antriebsseitigen Kegelräder (7.1, 7.2) der ersten und des zweiten Zwischengetriebes zur Umkehr der Drehrichtung gegeneinander gerichtet angeordnet sind, und wobei die Zähnezahlen der Kegelräder des zweiten Zwischengetriebes (7.2, 21.2) dem Übersetzungsverhältnis "N" entsprechen, und daß beide Einzugswalzen (20) eine ungleiche Anzahl von Reißleisten (23) aufweisen, wobei das Verhältnis der Zahl der Reißleisten (23) gleich dem Übersetzungsverhältnis "N" ist, und wobei die Durchmesser der beiden Einzugswalzen (20) einander gleich sind.

5. Erntevorsatz zum Pflücken von Fruchtständen hochwachsender Pflanzen, wie beispielsweise Mais oder Sonnenblumen, zur Durchführung des Verfahrens nach einem der Ansprüche 1 bis 3, der einzeln oder zu mehreren mit einem landwirtschaftlichen Erntegerät verbindbar ist, und der einen Einzugsweg für die Pflanzen aufweist, der von einem Pflückblech (16) mit einem Pflückspalt (15), sowie von einer ersten und einer zweiten, im wesentlichen sich parallel zu dem Pflückspalt (15) erstreckenden, mit radialen, miteinander kämmenden Reißleisten (23) versehenen, sich gegenläufig drehenden Einzugswalzen (20) gebildet ist, wobei jede der Einzugswalzen (20) über ein Zwischengetriebe (7.1, 21.1; 7.2, 21.2 oder 7.1, 21.1; 18.1, 18.2), von denen zumindest das erste als Kegelrad-Paar ausgebildet ist, von der Erntemaschine synchronisiert antreibbar sind, **dadurch gekennzeichnet**, daß als zweites Zwischengetriebe zwei miteinander kämmende Zahnräder (18.1, 18.2) vorgesehen sind, von denen das eine mit der ersten und das andere mit der zweiten der Einzugswalzen (20) verbunden ist, die somit indirekt mit dem Antrieb der Erntemaschine in Wirkverbindung steht, wobei diese Zahnräder (18.1, 18.2) den Drehsinn umkehren und das Verhältnis der Zähnezahlen der Zahnräder (18.1, 18.2) dieses zweiten Zwischengetriebes dem Übersetzungsverhältnis "N" entsprechen, und daß beide Einzugswalzen (20) eine ungleiche Anzahl von Reißleisten (23) aufweisen, wobei das Verhältnis der Zahl der Reißleisten (23) gleich dem Übersetzungsverhältnis "N" ist, und wobei die Durchmesser der beiden Einzugswalzen (20) einander gleich sind.

6. Erntevorsatz nach Anspruch 4 oder 5, **dadurch gekennzeichnet**, daß eine der Einzugswalzen (20) verdrehbar mit dem ihr zugeordneten Abtriebrad (18.1; 18.2; 21.1; 21.2) verbunden ist, zum Einstellen der Winkelstellung der Einzugswalzen (20) zueinander.

7. Erntevorsatz nach einem der Ansprüche 4 bis 6, **dadurch gekennzeichnet**, daß die Achsen der beiden Einzugswalzen (20) in Bezug auf ihren Abstand zu den Pflückschienen (16) gegeneinander versetzt sind.

8. Erntevorsatz nach einem der Ansprüche 4 bis 7, **dadurch gekennzeichnet**, daß die Reißleisten (23) achsparallel auf dem Mantel der Einzugswalzen (20) angeordnet sind, vorzugsweise als auf die Einzugswalzen-Welle (21) aufgesetzte Leistenprofile, wobei vorzugsweise der Querschnitt des die Einzugswalzen-Welle (21) umgebenden Mantels oder der Querschnitt der Einzugswalzen-Welle (21) ein polygonaler ist.

9. Erntevorsatz nach Anspruch 8, **dadurch gekennzeichne**t, daß die achsparallelen Reißleisten (23) in Abschnitte unterteilt sind, wobei jeder Reißleistenabschnitt gegenüber dem vorhergehenden in Drehrichtung um einen gewissen Winkelbetrag versetzt angeordnet ist und die Versetzung auf beiden Einzugswalzen (20) gegensinnig verläuft.

10. Erntevorsatz nach einem der Ansprüche 4 bis 9, **dadurch gekennzeichnet**, daß die Reißleisten (23) auf dem Mantel der Einzugswalzen (20) im Winkel zu einer achsparallelen Mittellinie verlaufend, bogenförmig um die Einzugswalzen (20) geführt sind, wobei die Bogenrichtungen auf beiden Einzugswalzen (20) gegensinnig verlaufen.

11. Erntevorsatz nach einem der Ansprüche 4 bis 10, **dadurch gekennzeichnet**, daß der zwischen beiden Pflückschienen (16) vorgesehene Pflückspalt (15) sowie die dazu im wesentlichen parallelen Einzugswalzen (20) im Winkel zur Fahrtrichtung der Erntemaschine angeordnet sind.

12. Erntevorsatz zum Pflücken von Fruchtständen hochwachsender Pflanzen, wie beispielsweise Mais oder Sonnenblumen, zur Durchführung des Verfahrens nach einem der Ansprüche 1 bis 3, der einzeln oder zu mehreren mit einem landwirtschaftlichen Erntegerät verbindbar ist, und der einen Einzugsweg für die Pflanzen aufweist, der von einem Pflückblech (16) mit einem Pflückspalt (15), sowie von einer ersten und einer zweiten, im wesentlichen sich parallel zu dem Pflückspalt (15) erstreckenden, mit radialen, miteinander kämmenden Reißleisten (23) versehenen, sich gegenläufig drehenden Einzugswalzen (20) gebildet ist, wobei jede der Einzugswalzen (20) über ein Zwischengetriebe (7.1, 21.1; 7.2, 21.2, 18.1, 18.2), von denen zumindest das erste als Kegelrad-Paar ausgebildet ist, von der Erntemaschine synchronisiert antreibbar sind, **dadurch gekennzeichnet**, daß die zwischen dem Zwischenantrieb (z.B. Welle 7) der Erntemaschine (1) und jeder der Einzugswalzen (20) angeordneten, von zwei Kegelradpaaren (7.1, 21.1; 7.2, 21.2) bzw. einem Kegelrad-Paar und einem Zahnrad-Paar (7.1, 21.1; 18.1, 18.2) gebildeten Zwischengetriebe die beiden Einzugswalzen mit gleicher Drehzahlen und in umgekehrtem Drehsinn antreiben, und daß die Drehkreise beider Einzugswalzen (20) mit ihren Reißleisten (23) unterschiedliche Durchmesser aufweisen, wobei deren Durchmesserverhältnis "N'" dem Übersetzungsverhältnis entspricht.

13. Erntevorsatz nach Anspruch 12, **dadurch gekennzeichnet**, daß eines der das Vorgelege bildenden Zahnräder (18.1, 18.2) und die dazugehörende Einzugswalze (20) bzw. eines der das Vorgelege bildenden Zahnräder (18.1, 18.2) und die dazugehörende Einzugswalze (20) verdrehbar miteinander verbunden sind zum Einstellen der Winkelstellung der Einzugswalzen (20) zueinander.

14. Erntevorsatz nach Anspruch 12 oder 13, **dadurch gekennzeichnet**, daß beide Einzugswalzen (20) eine gleiche Anzahl von Reißleisten (23) aufweisen.

## Claims

1. Process for harvesting crop clusters of tall plant stalks such as of maize or sunflowers in which the stalk bearing the crop cluster(s) is being seized by two intake rolls rotating in opposite directions which are provided with meshing ripper blades, and pulled through a gathering gap to strip said crop cluster(s) from said stalk and gather same as crop, and to fracture and/or chop the stalk freed from the crop cluster(s) into chaff, **characterized by the fact** that said intake rolls moving in opposite directions are rotated at different peripheral speeds so that the ripper blades of said rolls initially fracture and then severe the stalk adjacent an outlet zone due to the speed difference between the ripper blades coacting in each case, the number and the position of said ripper blades being such that due to said different peripheral speed during passage of one of the ripper blades of the one intake roll through the intake path one of the ripper blades of said other intake roll also goes through the intake path as the leading blade of the faster roll is leaving said path.

2. Proces according to claim 1, **characterized by the fact** that the different peripheral speed is achieved in that from the two intake rolls of identical diameter the first intake roll is rotated at a speed which is N times, preferably two times, faster than that of the second intake roll, the number and the position of said ripper blades being such that each and any passage of one of the ripper blades of the first intake roll through the intake path is effected concurrently with the passage of one the ripper blades of the second intake roll, and the circular paths of movement of said ripper blades are overlapping each other.

3. Process according to claim 1, **characterized by the fact** that the different peripheral speed is obtained in that the two intake rolls having different diameters are rotated at identical speed, the number and the position of said ripper blades being such that each and any passage of one of the ripper blades of the first intake roll through the intake path is effected concurrently with the passage of one of the ripper blades of the second intake roll, and the circular paths of movement of said ripper blades are overlapping each other.

4. Harvester attachment for gathering crop clusters of tall plant stalks such as of maize or sunflowers which is used to carry into effect the process disclosed in any of the preceding claims 1 to 3, of which one or a plurality of units can be attached to a harvester and which is provided with a plant intake path defined by a gathering plate (16) having a gathering gap (15), and by first and second intake rolls (20) extending substantially parallel to said gathering gap (15) which are provided with radial, meshing ripper blades (23) and arranged to rotate in opposite directions, each of said intake rolls (20) adapted to be driven in harvester-synchronized mode through intermediate gear means (7.1, 21.1; 7.2, 21.2; or 7.1, 21.1; 18.1, 18.2) of which the first one at least is configurated as bevel gear pair**, characterized by the fact** that another bevel gear pair (7.2, 21.2) is provided as second intermediate gear means, the input bevel wheels (7.1, 7.2) of said first and said second intermediate gear means being arranged for relative inversal of the sense of rotation thereof and the number of teeth provided on the bevel wheels of the second intermediate gear means (7.2, 21.2) conforming to the gear ratio "N", and that the two intake rolls (20) are fitted with a different number of ripper blades (23), the ratio between said number of ripper blades (23) being equal to the gear ratio "N" and the two intake rolls (20) having the same diameter.

5. Harvester attachment for gathering crop clusters of tall plant stalks such as of maize or sunflowers which is used to carry into effect the process disclosed in any of the preceding claims 1 to 3, of which one or a plurality of units can be attached to a harvester and which is provided with a plant intake path defined by a gathering plate (16) having a gathering gap (15), and by first and second intake rolls (20) extending substantially parallel to said gathering gap (15) which are provided with radial, meshing ripper blades (23) and arranged to rotate in opposite directions, each of said intake rolls (20) adapted to be driven in harvester-synchronized mode through intermediate gear means (7.1, 21.1; 7.2, 21.2; or 7.1, 21.1; 18.1, 18.2) of which the first one at least is configurated as bevel gear pair, **characterized** **by the fact** that two toothed wheels in meshing engagement (18.1, 18.2) are provided as second intermediate gear means of which one is connected to the first and the other to the second of said intake rolls (20) to thereby establish indirect active communication with the drive of the harvester, said toothed wheels 18.1, 18.2) being oper- ative to inverse the sense of rotation and the ratio between the number of teeth provided on said toothed wheels (18.1, 18.2) of said second intermediate gear means conforming to the gear ratio "N", and that the two intake rolls (20) have a different number of ripper blades (23) such as to make said number of blades (23) conform to the gear ratio "N", and the two intake rolls (20) being of identical diameter.

6. Harvester attachment according to claim 4 or 5, **characterized by the fact** that one of the intake rolls (20) is rotatably connected to its associated output wheel (18.1; 18.2; 21.1; 21.2) to enable the relative angular positions of the intake rolls (20) to be adjusted.

7. Harvester attachment according to any of the preceding claims 4 to 6, **characterized by the fact** that the axes of the two intake rolls (20) are spaced by different distances from the gathering plates (16).

8. Harvester attachment according to any of the preceding claims 4 to 7, **characterized by the fact** that the ripper blades (23) are disposed on the shell of the intake rolls (20) in axially parallel arrangement, preferably in the form of blade profiled elements fitted to the intake roll shaft (21), the shell surrounding the intake shaft (21) or the intake roll shaft (21) as such preferably being shaped as a polygon in crosssection.

9. Harvester attachment according to claim 8, **characterized by the fact** that the axially parallel ripper blades (23) are separated into a plurality of sections of which each is circumferentially offset by a defined angle relatively to its preceding section in the sense of rotation and that said offset on either of the intake rolls (20) is oriented in opposite directions.

10. Harvester attachment according to any of the preceding claims 4 to 9, **characterized by the fact** that the ripper blades (23) are so disposed on the shell of the intake rolls (20) as to extend helically around said rolls (20) under an angle relative to an axially parallel center-line, the helices on either intake roll (20) extending in opposite directions.

11. Harvester attachment according to any of the preceding claims 4 to 10, **characterized by the fact** that the gathering gap (15) between the two gathering plates (16) and the intake rolls (20) extending substantially parallel thereto are arranged under an angle to the direction of advancement of the harvester.

12. Harvester attachment for gathering crop clusters of tall plant stalks such as of maize and sunflowers which is used to carry into effect the process disclosed in any of the preceding claims 1 to 3, of which one or a plurality of units can be attached to a harvester and which is provided with a plant intake path defined by a gathering plate (16) having a gathering gap (15), and by first and second intake rolls (20) extending substantially parallel to said gathering gap (15) which are provided with radial, meshing ripper blades (23) and arranged to rotate in opposite directions, each of said intake rolls (20) adapted to be driven in harvester-synchronized mode through intermediate gear means (7.1, 21.1; 7.2, 21.2; 18.1, 18.2) of which the first one at least is configurated as bevel gear pair, **characterized by the fact** that the intermediate gear means arranged between the intermediate drive (for instance shaft 7) of the harvester (1) and each of the intake rolls (20) and consisting of two bevel gear pairs (7.1, 21.1; 7.2, 21.2) and/or one bevel gear and one toothed wheel pair (7.1, 21.1; 18.1, 18.2) operate both intake rolls at identical speeds, but in opposite directions, and that the circular paths of movement of both intake rolls (20) with ripper blades (23) are of different diameters, the diameter ratio "N'" of said rolls with blades conforming to the given gear ratio.

13. Harvester attachment according to claim 12, **characterized by the fact** that one of the toothed wheels (18.1, 18.2) forming the intermediate gear means and the associated intake roll (20) and/or one of the toothed wheels (18.1, 18.2) and the associated intake roll (20) are rotatably connected to each other to enable the relative angular positions of the intake rolls (20) to be adjusted.

14. Harvester attachment according to claim 12 or 13, **characterized by the fact** that both intake rolls (20) have the same number of ripper blades (23).

## Revendications

1. Procédé pour récolter les fruits de plantes sur pied, par exemple de mais ou de tournesol, la tige portant les fruits étant d'abord saisie par deux rouleaux d'amenée tournant en sens inverse l'un de l'autre et munis de lames de tirage en peigne, puis tirée dans une ouverture de cueillette en forme de fente, les fruits étant alors arrachés de la tige et constituant ainsi la récolte, tandis que la tige libérée des fruits est hachée pour constituer de ta paille, caractérisé en ce que les rouleaux d'amenée tournant en sens inverse l'un de l'autre et saisissant la tige, tournent avec des vitesses circonférentielles différentes, et en ce que leurs lames de tirage brisent d'abord la tige puis la déchirent complètement au niveau de la sortie, sous l'effet de la différence de vitesse des lames respectivement en action, le nombre et la disposition des lames de tirage étant tels que, étant donnée la différence de vitesse, le passage dans la zone d'amenée d'une lame de tirage du premier rouleau coïncide avec le passage d'une lame de tirage du deuxième rouleau dans cette même zone d'amenée, laquelle est quittée prématurément par la lame de tirage correspondant au rouleau le plus rapide.

2. Procédé selon la revendication 1, caractérisé en ce que la différence des vitesses circonférentielles est obtenue avec des rouleaux d'amenée de même diamètre, en entraînant le premier rouleau d'amenée à une vitesse de rotation correspondant à un multiple, de préférence au double, de la vitesse de rotation du deuxième rouleau d'amenée, le nombre et la disposition des lames de tirage étant tels que le passage dans la zone d'amenée de l'une des lames de tirage du premier rouleau correspond aussi, et toujours, au passage de l'une des lames de tirage du deuxième rouleau dans cette même zone d'amenée, les trajectoires circulaires de ces deux lames se recouvrant.

3. Procédé selon la revendication 1, caractérisé en ce que la différence des vitesses circonférientielles est obtenue avec des rouleaux d'amenée de diamètres différents entraînés à la même vitesse de rotation, le nombre et la disposition des lames de tirage étant tels que le passage dans la zone d'amenée de l'une des lames de tirage du premier rouleau correspond aussi, et toujours, au passage de l'une des lames de tirage du deuxième rouleau dans cette même zone d'amenée, les trajectoires circulaires de ces deux lames se recouvrant.

4. Accessoire de récolte pour cueillir les fruits de plantes sur pied, comme par exemple le maïs ou le tournesol, permettant la mise en oeuvre du procédé selon l'une quelconque des revendications 1 à 3, que l'on peut brancher seul ou en plus grand nombre sur une machine agricole de récolte, et qui présente une zone d'amenée pour les plantes, constituée d'une tôle de ramassage (16) avec une fente de ramassage (15), ainsi qu'un premier et qu'un deuxième rouleau d'amenée (20) disposés en gros parallèlement à la fente de ramassage, munis de lames radiales de tirage (23) disposées en peigne, et tournant en sens inverse l'un de l'autre, chacun des deux rouleaux pouvant être entraîné par la machine de récolte en mode synchronisé, grâce à un boîtier intermédiaire (7.1, 21.1 ; 7.2, 21.2 ou 7.1, 21.1 ; 18.1, 18.2) dont au moins le premier est constitué d'un couple d'engrenages coniques, caractérisé en ce qu'un autre couple d'engrenages coniques (7.2, 21.2) est également utilisé pour le deuxième boîtier intermédiaire, les pignons coniques du côté de l'entraînement (7.1, 7.2) du premier et du deuxième boîtier intermédiaire étant disposés selon des orientations opposées l'une de l'autre pour inverser le sens de rotation, et les nombres de dents des engrenages coniques du deuxième boîtier intermédiaire (7.32, 21.2) correspondant au rapport de transmission "N", et en ce que les deux rouleaux d'amenée (20) présentent un nombre différent de lames de tirage (23), le rapport entre les nombres de lames de tirage (23) étant égal au rapport de transmission "N", et les diamètres des deux rouleaux d'amenée étant égaux l'un à l'autre.

5. Accessoire de récolte pour cueillir les fruits de plantes sur pied, comme par exemple le maïs ou le tournesol, permettant la mise en oeuvre du procédé selon l'une quelconque des revendications 1 à 3, que l'on peut brancher seul ou en plus grand nombre sur une machine agricole de récolte, et qui présente une zone d'amenée pour les plantes, constituée d'une tôle de ramassage (16) avec une fente de ramassage (15), ainsi qu'un premier et qu'un deuxième rouleau d'amenée (20) disposés en gros parallèlement à la fente de ramassage, munis de lames radiales de tirage (23) disposées en peigne, et tournant en sens inverse l'un de l'autre, chacun des deux rouleaux pouvant être entraîné par la machine de récolte en mode synchronisé, grâce à un boîtier intermédiaire (7.1, 21.1 ; 7.2, 21.2 ou 7.1, 21.1 ; 18.1, 18.2) dont au moins le premier est constitué d'un couple d'engrenages coniques, caractérisé en ce que le deuxième boîtier intermédiaire est constitué de deux pignons (18.1, 18.2) engrenant l'un avec l'autre et dont l'un est relié au premier et l'autre au deuxième des deux rouleaux d'amenée (20), lesquels se trouvent ainsi, indirectement, en liaison active avec l'entraînement de la machine de récolte, ces pignons (18.1, 18.2) inversant le sens de rotation et le rapport entre les nombres de dents de ces pignons (18.1, 18.2) correspondant au rapport de transmission "N" et en ce que les deux rouleaux d'amenée (20) présentent un nombre différent de lames de tirage (23), le rapport entre les nombres de lames de tirage (23) étant égal au rapport de transmission "N", et les diamètres des deux rouleaux d'amenée étant égaux.

6. Accessoire de récolte selon la revendication 4 ou la revendication 5, caractérisé en ce que l'un des rouleaux d'amenée (20) est monté d'une manière autorisant un pivotement sur le pignon d'entraînement qui lui est associé (18.1 - 18.1 ; 21.1 ; 21.2), de manière à pouvoir choisir l'angle entre les positions des deux rouleaux d'amenée (20).

7. Accessoire de récolte selon l'une quelconque des revendications 4 à 6, caractérisé en ce que les axes des deux rouleaux d'amenée (20) sont décalés l'un par rapport à l'autre du point de vue de leur distance aux rails de ramassage (16).

8. Accessoire de récolte selon l'une quelconque des revendications 4 à 7, caractérisé en ce que les lames de tirage (23) sont disposées avec leurs axes parallèles sur le pourtour des rouleaux d'amenée (20), de préférence sous la forme de moulures placées sur les arbres (21) des rouleaux d'amenée, la section des pourtours des arbres (21) des rouleaux d'amenée ou les arbres (21) des rouleaux d'amenée étant de préférence des polygones.

9. Accessoire de récolte selon la revendication 8, caractérisé en ce que les lames de tirage (23) parallèles à l'axe sont divisées en sections, chaque section de lame de tirage étant disposée par rapport à la précédente avec un certain décalage angulaire dans le sens de la rotation, le sens du décalage étant inversé d'un rouleau d'amenée (20) à l'autre.

10. Accessoire de récolte selon l'une quelconque des revendications 4 à 9, caractérisé en ce que les lames de tirage (23) placées sur le pourtour des rouleaux d'amenée (20) sont inclinées par rapport à une ligne médiane parallèle à l'axe et présentent une forme arrondie autour des rouleaux d'amenée (20), les arrondis présentant des directions opposées sur les deux rouleaux d'amenée (20).

11. Accessoire de récolte selon l'une quelconque des revendications 4 à 10, caractérisé en ce que la fente de ramassage (15) prévue entre les deux rails de ramassage (16), ainsi que tes rouleaux d'amenée (20) essentiellement parallèles à celle-ci, sont disposés en oblique par rapport à la direction de déplacement de la machine de récolte.

12. Accessoire de récolte pour cueillir les fruits et plantes sur pied, comme par exemple le maïs ou te tournesol, permettant la mise en oeuvre du procédé selon l'une quelconque des revendications 1 à 3, que l'on peut brancher seul ou en plus grand nombre sur une machine agricole de récolte, et qui présente une zone d'amenée pour les plantes, constituée d'une töle de ramassage (16) avec une fente de ramassage (15), ainsi que d'un premier et d'un deuxième rouleau d'amenée (20) disposés en gros parallèlement à la fente de ramassage, munis de lames radiales de tirage (23) disposées en peigne, et tournant en sens inverse l'un de l'autre, chacun des deux rouleaux pouvant être entraîné par la machine de récolte en mode synchronisé, grâce à un boîtier intermédiaire (7.1, 21.1 ; 7.2, 21.2 ou 7.1, 21.1 ; 18.1, 18.2) dont au moins le premier est constitué d'un couple d'engrenages coniques caractérisé en ce que le boîtier intermédiaire placé entre l'entraînement intermédiaire (par exemple l'arbre 7) de la machine de récolte (1) et chaque rouleau d'amenée (20) et constitué de deux couples d'engrenages coniques (7.1, 21.1 ; 7.2, 21.2) ou d'un couple d'engrenages coniques et d'un couple de pignons (7.1, 21.1 ; 18.1, 18.2), entraîne les deux rouleaux d'amenée à la même vitesse de rotation et en sens inverse, et en ce que les trajectoires circulaires des lames de tirage (23) sur les deux rouleaux d'amenée (20) présentent des diamètres différents, le rapport des diamètres "N" correspondant au rapport de transmission.

13. Accessoire de récolte selon la revendication 12, caractérisé en ce que l'un des pignons (18.1, 18.2) constituant l'engrenage' et le rouleau d'amenée correspondant (20), ou l'autre des pignons (18.1, 18.2) constituant l'engrenage et le rouleau d'amenée correspondant (20), sont reliés d'une manière autorisant un pivotement, pour régler l'angle des deux rouleaux d'amenée (20) entre eux.

14. Accessoire de récolte selon la revendication 12 ou la revendication 13, caractérisé en ce que les deux rouleaux d'amenée (20) présentent le même nombre de lames de tirage (23).
